# EUROPÄISCHE PATENTSCHRIFT

(11) **EP 3 392 794 B1**
(45) Veröffentlichungstag und Bekanntmachung des Hinweises auf die Patenterteilung: **11.06.2025**
(21) Anmeldenummer: 18165632.3
(22) Anmeldetag: 04.04.2018
(51) Int. Cl.: G06F 21/75, H04L 9/00

(54) **OBFUSKATION DURCH SOFT-COMPUTING-BASIERTE IMPLEMENTIERUNG**
OBFUSCATION THROUGH SOFT-COMPUTING-BASED IMPLEMENTATION
OBFUSCATION AU MOYEN DE L'IMPLÉMENTATION BASÉE SUR UN CALCUL SOUPLE

(30) Priorität: 20.04.2017 DE 102017206648
(43) Veröffentlichungstag der Anmeldung: 24.10.2018
(73) Patentinhaber: Robert Bosch GmbH, 70442 Stuttgart (DE)
(72) Erfinder: Duplys, Paulius, 71706 Markgroeningen (DE); Baur, Heiko, 73037 Goeppingen (DE)

(56) Entgegenhaltungen:
- EP-A1- 2 721 763
- EP-B1- 2 499 560
- EP-B1- 2 721 763
- CN-B- 103 646 219
- US-A1- 2003 161 467
- US-A1- 2016 127 123
- US-A1- 2017 103 236

## Beschreibung

Die vorliegende Erfindung betrifft ein Verfahren zum Schutz einer zur Ausführung wenigstens einer Rechenoperation eingerichteten Recheneinheit vor kryptoanalytischen Angriffen, insbesondere Seitenkanal-Angriffen und Reverse Engineering, sowie eine Recheneinheit und ein Computerprogramm zu dessen Durchführung.

### Stand der Technik

Mit der Verbreitung von starken, standardisierten kryptographischen Mechanismen in kommerziellen Anwendungen hat sich der Fokus der Angreifer vom Brechen des kryptographischen Algorithmus (d.h. der Mathematik hinter dem Algorithmus) verschoben hin zum Brechen der Implementierung des Algorithmus auf dem Zielgerät.

Ein typisches Beispiel für solche Implementierungsangriffe sind sog. Seitenkanal-Angriffe (SCA, engl. *side channel attacks* oder *side channel analysis attacks*). Bei SCA-Angriffen zeichnet der Gegner die sogenannte Seitenkanalleckage (engl. *side channel leakage*) des Zielgerätes (meist eine integrierte Schaltung bzw. ein Mikroprozessor/Mikrocontroller, z.B. einer Chipkarte, eines Security-Tokens oder eines Hardware-Sicherheitsmoduls eines Steuergeräts) auf, während dieses kryptographische Operationen durchführt. Die Seitenkanalleckage kann jede physikalische Größe sein - zum Beispiel Energieverbrauch, elektromagnetische Emanation, Ausführungszeit usw. -, die mit der internen Schaltaktivität der integrierten Schaltung zusammenhängt, z.B. der Schaltaktivität der CMOS-Gates in einer Hardware-Implementierung eines kryptographischen Algorithmus. Diese Information kann dann vom Angreifer verwendet werden, um Teile des internen Zustands der integrierten Schaltung zu ermitteln und daraus den von dem kryptographischen Algorithmus verwendeten geheimen Schlüssel zu bestimmen, typischerweise im Bereich von einigen Minuten bis zu mehreren Stunden. Im Wesentlichen wird ein SCA-Angriff möglich, weil ein Angreifer, der physischen Zugriff auf das Zielgerät hat, während der Ausführung Informationen über den internen Zustand des kryptographischen Algorithmus sammeln kann.

Verfahren der Stromverbrauchsanalyse (Power Analysis) untersuchen dabei den Energieverbrauch eines Mikroprozessors während kryptographischer Berechnungen. Der Energieverbrauch variiert abhängig von den jeweils ausgeführten Mikroprozessorbefehlen. Hierdurch sind Rückschlüsse über ausgeführte Operationen sowie über den Schlüssel, der diesen zugrunde liegt, möglich. Hierdurch erhaltene "Spuren" (eine bestimmte Menge bzw. Anzahl von Energieverbrauchsmessungen, die von einer kryptographischen Rechenoperation über die Zeit erhalten wurden) können zum Aufdecken von Mustern, wie etwa DES-Runden oder RSA-Operationen verwendet werden. Unterschiede in den jeweiligen Spuren lassen Rückschlüsse auf den verwendeten Schlüssel zu. Neben der einfachen Stromverbrauchsanalyse lässt insbesondere die sogenannte differentielle Stromverbrauchsanalyse (Differential Power Analysis, DPA) derartige Rückschlüsse zu.

Die Elektromagnetische Analyse (Electromagnetic Analysis, EM) beruht auf einer entsprechenden Auswertung der elektromagnetischen Abstrahlung.

Eine weitere Klasse von Angriffen, die auf der Fähigkeit des Angreifers basieren, auf den internen Zustand des Zielalgorithmus zuzugreifen, sind sog. *Reverse Engineering-basierte* Angriffe. In diesem Fall untersucht der Angreifer typischerweise die Binärdatei des Zielalgorithmus sowie die Werte der Maschinenregister und dessen Speicher während der Ausführung der Binärdatei.

Mit dieser Information kann der Angreifer den Zielalgorithmus leicht brechen. Beispielsweise wenn der geheime Schlüssel, der von einem kryptographischen Algorithmus verwendet wird, in der Binärdatei enthalten ist, kann der Angreifer diesen Schlüssel durch statisches Analysieren der Binärdatei extrahieren. Alternativ, wenn der Schlüssel in der Binärdatei in einer mittels statischer Analyse-Techniken nicht verständlichen Weise eingebunden ist, kann der Angreifer die Binärdatei ausführen, die Software-Traces (d.h. die Werte der Register und den Inhalt des Speichers während der Ausführung der Binärdatei) aufzeichnen und diese 'dynamischen' Information nutzen, um den Schlüssel zu extrahieren. Solche Techniken sind auch unter dem Begriff *Differential Computation Analysis* bekannt.

Aus der US 2016/127123 ist ein System und Verfahren zur dynamischen Datenmaskierung bekannt. Die Verfahren und System können verwendet werden, um Daten in kryptographischen Vorgängen, wie fortgeschrittenen Verschlüsselungsstandardvorgängen (AES), Datenverschlüsselungsstandardvorgängen (DES) oder Triple-DES-Vorgängen, dynamisch zu maskieren.

Aus der US 2017/0103236 ist eine Methode bekannt, welche zum Entwerfen von sicheren Integriertenschaltungen verwendet werden kann.

US 2003/161467 offenbart einen kompakten Doppelfunktions-Zufallszahlengenerator und ein Stromverschlüsselungsgenerator umfassend eine Crypto-Engine, die über einen Controller zur Steuerung der Engine verfügt.

CN 103 646 219 offenbart eine Stromverbrauchskompensations- und Angriffswiderstandsschaltung, die auf der Vorhersage des Stromverbrauchs eines neuronalen Netzwerks basiert, und ein Steuerverfahren.

EP 2721763 offenbart ein Verfahren zur Datenübertragung, umfassend ein Empfangen eines Steuersignals, das eine Übertragung eines geheimen Werts in ein Element einer Schaltung auslöst. In Reaktion auf das Steuersignal werden nacheinander ein Dummy-Wert und der geheime Wert in das Element der Schaltung eingefügt.

### Offenbarung der Erfindung

Erfindungsgemäß werden ein Verfahren zum Schutz einer zur Ausführung wenigstens einer Rechenoperation eingerichteten Recheneinheit vor kryptoanalytischen Angriffen sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen der Erfindung wird eine Methode zum Schutz vor Angriffen während der Ausführung von im Rahmen eines kryptographischen Verfahrens ausgeführten Rechenoperationen vorgestellt. Die Erfindung bedient sich dabei der Maßnahme, wenigstens eine Rechenoperation mittels sog. *Soft-Computing-*Techniken zu implementieren, so dass die zugrunde liegenden Rechenoperationen versteckt sind (Obfuskation).

Durch die Erfindung wird die Verbindung zwischen den Geheimnissen, die in der Implementierung des angewandten Algorithmus gespeichert oder von diesem verarbeitet werden, und den genutzten auf dem inneren Zustand basierenden Informationen, die vom Angreifer beobachtet bzw. aufgezeichnet werden können, aufgebrochen. Die Erfindung kann sowohl Hardware- als auch Software-Implementierungen schützen.

Soft-Computing-Techniken sind an sich bekannt. Jedoch werden sie bisher üblicherweise genutzt, um nicht eindeutig berechenbare Vorgänge computerimplementiert nachbilden zu können (Stichwort Lernen, künstliche Intelligenz). Es handelt sich somit um Techniken der Künstlichen Intelligenz (KI) zur numerischen Ermittlung von Näherungslösungen. *Soft-Computing* umfasst v.a. die Bereiche der Fuzzy Logic, der künstlichen neuronalen Netze, des probabilistischen Schließens, der Evolutionsstrategien, der genetischen Algorithmen, der Hidden-Markov-Modelle und der Random-Forrest-Verfahren. Im Rahmen der Erfindung wurde nun jedoch erkannt, dass sich diese Techniken auch besonders gut dazu eignen, Rechenoperationen zu verschleiern. Dabei kommt die Lösung ohne zufällige Maßnahmen aus.

Vorteilhafterweise lassen sich beliebige Rechenoperationen mittels einer auf Soft-Computing basierenden Technik implementieren. Es bieten sich insbesondere Bitoperationen an, bei denen aus einer bestimmten Anzahl Eingangsbits eine bestimmte Anzahl Ausgangsbits erzeugt wird, z.B. aus einem Eingangsbit ein Ausgangsbit oder Ausgangsbyte, oder aus einem Eingangsbyte ein Ausgangsbit oder Ausgangsbyte. Beispielsweise können acht solcher Rechenoperationen zusammen aus einem Eingangsbyte ein Ausgangsbyte erzeugen. Es versteht sich, dass hier beliebige Verhältnisse zwischen den Anzahlen der Eingangs- und Ausgangsbits möglich sind.

Vorzugsweise ist die wenigstens eine Rechenfunktion ein Schritt oder Teilschritt eines kryptographischen Verfahrens, insbesondere solcher, die an einen Schlüssel gebunden sind bzw. mit einem geheimen Schlüssel operieren, z.B. einer Verschlüsselung oder Entschlüsselung, einer Hashwert-Berechnung, einer Signierung usw.

Die wenigstens eine Rechenfunktion ist dabei ein Schritt eines AES-Blockchiffre-Algorithmus, wie AddRoundKey, SubBytes oder insbesondere MixColumns.

Gemäß der vorliegenden Erfindung wird ein künstliches neuronales Netzwerk (ANN, engl. *artificial neural network*) verwendet. Künstliche neuronale Netzwerke bzw. die Techniken, Rechenoperationen als solche darzustellen, sind an sich bekannt. Im Rahmen der Erfindung können diese nun besonders vorteilhaft zum effektiven Verbergen von kryptographischen Rechenoperationen genutzt werden. Insbesondere eignen sich diese sehr gut für die genannten Bitoperationen, indem jeweils ein Eingangs- und Ausgangsneuron ein Bit darstellt.

Die Erfindung kann dadurch weiter verbessert werden, dass der *Soft-Computing-*Implementierung eine beliebige Anzahl von Elementen, die nicht mit der zu schützenden Berechnung zusammenhängen, hinzugefügt wird. Beispielsweise können bei einer Implementierung als ANN zusätzliche Eingangs- oder Ausgangsneuronen eingebaut werden, die mit der eigentlichen Rechenoperation nichts zu tun haben. Dementsprechend kann ein beliebiger großer interner Zustand des ANN nicht mit der tatsächlichen Rechenoperation zusammenhängen und so die Analyse weiter erschweren. Im Ergebnis enthält in der endgültigen Darstellung der Rechenoperation nur eine (willkürliche) kleine Teilmenge des internen Zustands des ANN tatsächlich Informationen, die für den Angreifer nützlich sind. Allerdings ist der Angreifer nicht in der Lage zu bestimmen, welche Untergruppe dies ist. Im Rahmen von Angriffen erhaltenen Daten kann auf diese Weise (beliebig viel) Rauschen hinzugefügt werden, so dass ein erfolgreicher Angriff erschwert oder ganz unmöglich wird.

Eine erfindungsgemäße Recheneinheit, z.B. ein Mikrocontroller, z.B. in einem Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

Figur 1 zeigt schematisch eine bevorzugte Ausführungsform eines künstlichen neuronalen Netzwerks, welches eine kryptographische Rechenoperation ausführt.
Figur 2 zeigt schematisch eine bevorzugte Ausführungsform eines AES-Verfahrens, bei dem ausgewählte Rechenoperationen mittels künstlicher neuronaler Netzwerke implementiert sind.

### Ausführungsform(en) der Erfindung

In die Praxis kann die Erfindung insbesondere dadurch umgesetzt werden, dass eine kryptographische Rechenoperation oder der gesamte Algorithmus (mit zahlreichen Operationen) mittels auf Soft-Computing basierender Techniken implementiert wird. Als Beispiel wird im Folgenden der SubBytes-Schritt des FIPS-197 AES-Algorithmus auf eine Darstellung basierend auf künstlichen neuronalen Netzwerken (ANN) abgebildet.

Bei dem SubBytes-Schritt wird bekanntermaßen ein Eingangsbyte B_{IN} unter Verwendung einer sog. S-Box durch ein Ausgangsbyte B_{OUT} ersetzt. Die S-Box besteht in diesem Fall aus 256 Bytes in 16 Spalten und 16 Zeilen, in hexadezimaler Schreibweise beginnend mit 0x63 bei Position (00) usw.

Einer bevorzugten Implementierung liegt nun die Idee zu Grunde, jedes der acht Bits b₀, b₁, ..., b₇ des Ausgangsbytes B_{OUT} mittels eines eigenen ANN erzeugen zu lassen, wobei jedem dieser acht ANN die acht Bits des Eingangsbytes B_{IN} an den Eingangsknoten zugeführt werden. Somit wird der SubBytes-Schritt in acht Bitoperationen zerlegt, wobei jeweils aus acht Eingangsbits ein Ausgangsbit erzeugt wird.

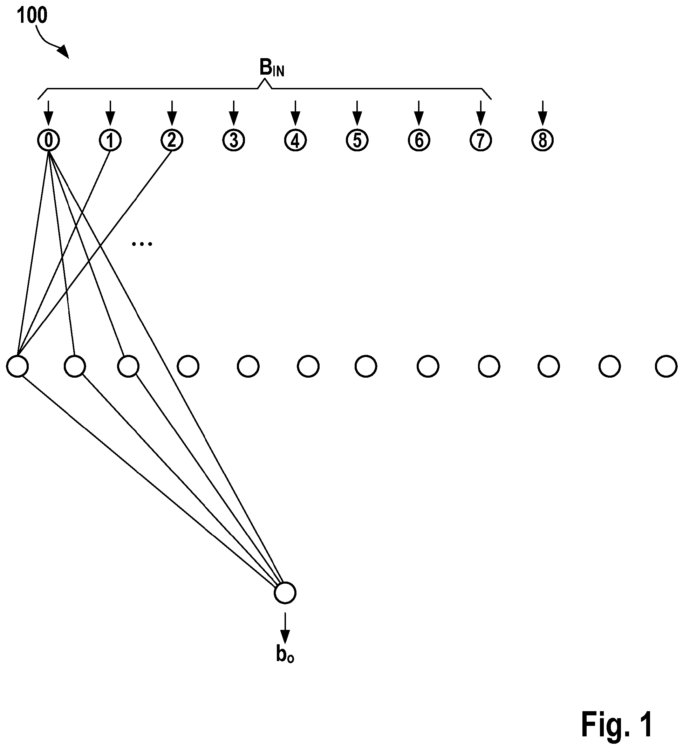

Beispielsweise ist in Figur 1 schematisch eine beispielhafte Struktur eines solchen ANN 100 zur Erzeugung des Bits b₀ gezeigt.

Das ANN 100 weist drei Ebenen mit einer Eingabeebene mit 9 Knoten ("Neuronen") (nummeriert von 0 bis 8), einer Zwischenebene mit 12 Neuronen und einer Ausgabeebene mit 1 Neuron. Die Neuronen können jeweils den Wert "0" oder "1" annehmen. Wie bei einem ANN üblich, bestehen zwischen den einzelnen Neuronen zahlreiche Verbindungen mit unterschiedlicher Gewichtung. Zur besseren Übersicht sind in Figur 1 nur sehr wenige Verbindungen gezeigt, wobei jedoch insgesamt 129 Verbindungen existieren. In einem der Implementierung zu Grunde liegenden Lernschritt werden die Gewichtungen der Verbindungen, die notwendig sind, damit die Funktion der obigen S-Box erhalten wird, eingelernt.

Es ist erkennbar, dass das ANN neun Eingangsneuronen aufweist, von denen jedoch nur acht für die Implementierung der kryptographischen Rechenoperation benötigt werden. Gemäß der dargestellten Ausführungsform dient das zusätzliche neunte Eingangsneuron (8) der zusätzlichen Verschleierung bzw. dem Erzeugen von Rauschen. Dementsprechend hängt ein Teil des internen Zustands des ANN nicht mit der tatsächlichen kryptographischen Rechenoperation zusammen.

In gleicher Weise können als kryptographische Operationen für die Verschlüsselung auch der AddRoundKey-Schritt und/oder der ShiftRows-Schritt und/oder der MixColumns-Schritt als ANN implementiert werden.

In gleicher Weise können als kryptographische Operationen für die Entschlüsselung auch der InvSubBytes-Schritt und/oder der InvShiftRows-Schritt als ANN implementiert werden.

Soll eine Rechenoperation beispielsweise mittels Random-Forrest-Klassifizierung implementiert werden, würde der Klassifizierer ähnlich wie das ANN mit Trainingsdaten angelernt, wobei ein Entscheidungsbaum mit den entsprechenden Schwellwerten für die jeweiligen Bits aufgebaut wird. Dieser Entscheidungsbaum kann dann in der normalen Operation verwendet werden, um z.B. den Input für den SubBytes-Schritt auf den entsprechenden Output abzubilden. Im Prinzip kann man mit einer Random-Forrest-Klassifizierung eine Menge an Eingangsdaten auf eine n-dimensionale Fläche projizieren und dann schneiden.

Ein weiteres Beispiel von Soft-Computing Techniken sind genetische Algorithmen. Diese Klasse von Soft-Computing Techniken zeichnet sich dadurch aus, dass aus einer ggf. zufällig gewählten Anfangspopulation vollautomatisiert "Nachfahren-Generationen" gebildet und mittels einer sog. Fitness-Funktion bewertet werden. Die Nachfahren, welche im Sinne der Fitness-Funktion besonders überlebensfähig sind, bleiben als Gen-Spender für die nächste Generation erhalten. Somit wird hier das Prinzip der natürliche Evolution angewandt. Im vorliegenden Fall wird die Fitness-Funktion so gewählt, dass die Seitenkanal-Information (bspw. Korrelation zwischen den verarbeiteten Daten und dem Stromverbrauch oder der datenabhängige Laufzeit) minimiert wird. Das Evolutionsprinzip der genetischen Algorithmen führt nun dazu, dass vollautomatisiert Implementierungen generiert werden können, die sowohl in Software als auch in Hardware realisiert werden können, und dass dabei die Menge der Seitenkanal-Information minimiert wird. Es wäre beispielsweise möglich, die Werte der elektromagnetischen Abstrahlung von Bauteilen in die Fitness-Funktion aufzunehmen und diese dann während der Evolution mittels z.B. SPICE-Simulationen zu bestimmen und für das Endergebnis zu optimieren.

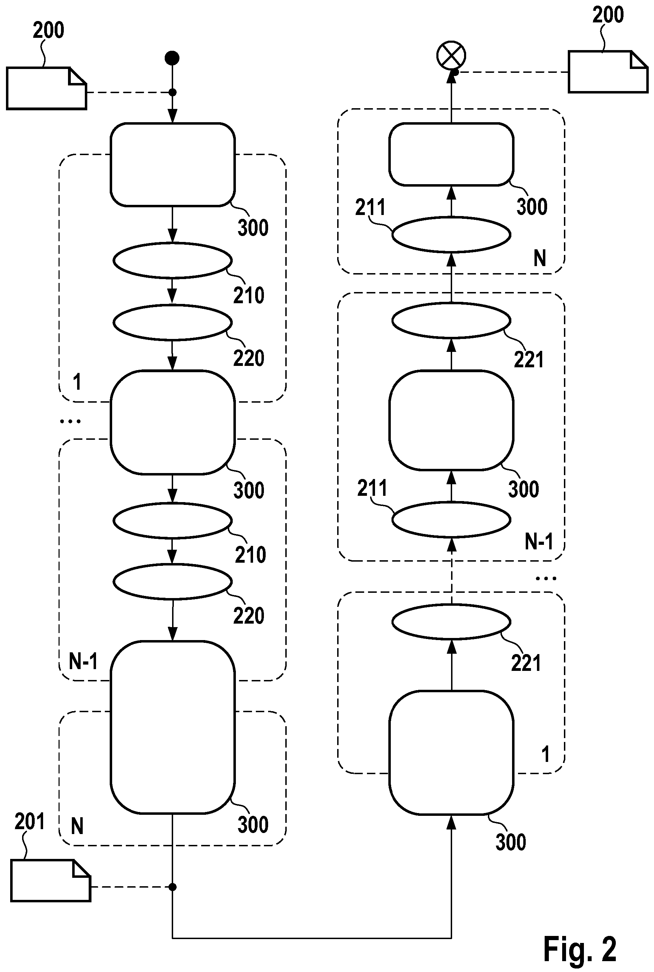

Eine bevorzugte Implementierung des gesamten Verfahrens ist in Figur 2 dargestellt.

Auf der linken Seite ist der Verschlüsselungsvorgang ausgehend von einem Klartext 200 über die bekannte rundenbasierte AES-Verschlüsselung (N Runden) bis zu einem Geheimtext 201 dargestellt, auf der rechten Seite die zugehörige Entschlüsselung zurück zum Klartext 200.

Hierbei sind einzelne Schritte, hier ShiftRows-Schritte 210 und MixColumns-Schritte 220 sowie InvShiftRows-Schritte 211 und InvMixColumns-Schritte 221, in herkömmlicher Art und andere Schritte gemäß einer bevorzugten Ausführungsform der Erfindung als ANN 300 implementiert. Gemäß der vorliegenden Erfindung, sind die mit der S-Box bzw. deren Invertierten zusammenhängenden Schritte nämlich AddRoundKey, SubBytes und InvSubBytes) hierbei als ANN implementiert, um keine Angriffe basierend auf der bekannten S-Box-Struktur zu ermöglichen. Vorzugsweise sind jedoch auch die genannten auf herkömmliche Weise implementierten Schritte (hier also ShiftRows, MixColumns, InvShiftRows und InvMixColumns) stellenweise als ANN implementiert, beispielsweise bei den Übergängen zwischen einzelnen Runden und insbesondere zu Beginn und am Ende des Verfahrens (siehe Kästchen 300 in Figur 2).

Die Erfindung ermöglicht somit, beliebige kryptographische Rechenoperationen oder ganze kryptographische Verfahren bzw. Algorithmen vor Angriffen zu schützen, indem sie mittels *Soft-Computing*-Techniken implementiert werden.

## Patentansprüche

1. Verfahren zum Schutz einer zur Ausführung wenigstens einer kryptographischen Rechenoperation (300) eingerichteten Recheneinheit vor kryptoanalytischen Angriffen **dadurch gekennzeichnet,**
**dass** die wenigstens eine kryptographische Rechenoperation (300) mittels einer Soft-Computing-Technik (100) implementiert wird,
wobei die Soft-Computing-Technik ein künstliches neuronales Netzwerk (100) umfasst,
wobei die wenigstens eine kryptographische Rechenoperation (300) ein Schritt eines AES-Blockchiffre-Algorithmus ist, und,
wobei die wenigstens eine kryptographische Rechenoperation (300) einen SubBytes-Schritt und/oder einen AddRoundKey-Schritt umfasst.

2. Verfahren nach Anspruch 1, wobei die wenigstens eine kryptographische Rechenoperation (300) eine Bitoperation umfasst, bei der aus einer bestimmten Anzahl Eingangsbits (0, ..., 8) eine bestimmte Anzahl Ausgangsbits (b₀) erzeugt werden.

3. Verfahren nach Anspruch 2, wobei die Anzahl der Eingangsbits (0, ..., 8) mindestens so groß ist wie die Anzahl der Ausgangsbits (b₀).

4. Verfahren nach einem der vorstehenden Ansprüche, wobei dem künstlichen neuronalen Netzwerk (100) wenigstens ein Eingangsneuron (8) und/oder Ausgangsneuron hinzugefügt wird, welches nicht zu der wenigstens einen kryptographischen Rechenoperation (300) gehört.

5. Verfahren nach einem der vorstehenden Ansprüche, wobei die wenigstens eine Rechenoperation (300)weiterhin einen ShiftRows-Schritt und/oder einen InvSubBytes-Schritt und/oder einen InvShiftRows-Schritt und/oder einen MixColumns-Schritt umfasst.

6. Verfahren nach einem der vorstehenden Ansprüche, wobei die kryptoanalytischen Angriffe Seitenkanalattacken und oder Reverse Engineering umfassen.

7. Recheneinheit, umfassend Mittel zur Ausführung von einem der vorstehenden Ansprüche.

8. Computerprogramm, das eine Recheneinheit dazu veranlasst, ein Verfahren nach einem der Ansprüche 1 bis 7 durchzuführen, wenn es auf der Recheneinheit ausgeführt wird.

9. Maschinenlesbares Speichermedium mit einem darauf gespeicherten Computerprogramm nach Anspruch 8.

## Claims

1. Method for protecting a computing unit configured for executing at least one cryptographic computing operation (300) against cryptoanalytic attacks, **characterized**
**in that** the at least one cryptographic computing operation (300) is implemented by means of a soft computing technique (100),
wherein the soft computing technique comprises an artificial neural network (100),
wherein the at least one cryptographic computing operation (300) is a step of an AES block cipher algorithm, and
wherein the at least one cryptographic computing operation (300) comprises a SubBytes step and/or an AddRoundKey step.

2. Method according to Claim 1, wherein the at least one cryptographic computing operation (300) comprises a bit operation in which a specific number of output bits (b₀) are generated from a specific number of input bits (0, ..., 8).

3. Method according to Claim 2, wherein the number of input bits (0, ..., 8) is at least equal to the number of output bits (b₀).

4. Method according to any of the preceding claims, wherein at least one input neuron (8) and/or output neuron which does not belong to the at least one cryptographic computing operation (300) is added to the artificial neural network (100).

5. Method according to any of the preceding claims, wherein the at least one computing operation (300) furthermore comprises a ShiftRows step and/or an InvSubBytes step and/or an InvShiftRows step and/or a MixColumns step.

6. Method according to any of the preceding claims, wherein the cryptoanalytic attacks include side channel attacks and/or reverse engineering.

7. Computing unit comprising means for carrying out any of the preceding claims.

8. Computer program which causes a computing unit to carry out a method according to any of Claims 1 to 7 when said computer program is executed on the computing unit.

9. Machine-readable storage medium with a computer program according to Claim 8 stored thereon.

## Revendications

1. Procédé de protection d'une unité de calcul configurée pour exécuter au moins une opération de calcul cryptographique (300) contre les attaques cryptanalytiques, **caractérisé**
**en ce que** ladite au moins une opération de calcul cryptographique (300) est mise en œuvre au moyen d'une technique de calcul logiciel (100),
la technique de calcul logiciel comprenant un réseau neuronal artificiel (100),
ladite au moins une opération de calcul cryptographique (300) étant une étape d'un algorithme de chiffrement par bloc AES, et
ladite au moins une opération de calcul cryptographique (300) comprenant une étape SubBytes et/ou une étape AddRoundKey.

2. Procédé selon la revendication 1, dans lequel ladite au moins une opération de calcul cryptographique (300) comprend une opération binaire dans laquelle un certain nombre de bits de sortie (b₀) sont générés à partir d'un certain nombre de bits d'entrée (0,..., 8).

3. Procédé selon la revendication 2, dans lequel le nombre de bits d'entrée (0,..., 8) est au moins aussi grand que le nombre de bits de sortie (b₀).

4. Procédé selon l'une des revendications précédentes, dans lequel au moins un neurone d'entrée (8) et/ou un neurone de sortie, qui n'appartient pas à ladite au moins une opération de calcul cryptographique (300), est ajouté au réseau neuronal artificiel (100).

5. Procédé selon l'une des revendications précédentes, dans lequel ladite au moins une opération de calcul (300) comprend en outre une étape ShiftRows et/ou une étape InvSubBytes et/ou une étape InvShiftRows et/ou une étape MixColumns.

6. Procédé selon l'une des revendications précédentes, dans lequel les attaques cryptanalytiques comprennent des attaques par canal auxiliaire et/ou de la rétro-ingénierie.

7. Unité de calcul comprenant des moyens pour mettre en œuvre l'une des revendications précédentes.

8. Programme informatique qui, lorsqu'il est exécuté sur l'unité de calcul, amène celle-ci à mettre en œuvre un procédé selon l'une des revendications 1 à 7.

9. Support de stockage lisible par machine sur lequel est enregistré un programme informatique selon la revendication 8.
